# EUROPÄISCHE PATENTSCHRIFT

(11) **EP 2 778 267 B1**
(45) Veröffentlichungstag und Bekanntmachung des Hinweises auf die Patenterteilung: **28.08.2019**
(21) Anmeldenummer: 13001216.4
(22) Anmeldetag: 11.03.2013
(51) Int. Cl.: B32B 5/02, B32B 5/24, D06M 15/00, D06M 15/564, D06N 3/00, D03D 7/00, D03D 11/00, B32B 7/05

(54) **Polstermaterial für eine federnde, isolierende oder wattierende Abdeckung von Gegenständen oder Bauteilen**
Padding material for use as the cushioning, insulating or padding cover of objects or components
Matériau de rembourrage pour le recouvrement élastique, isolant ou matelassé d'objets ou de composants

(43) Veröffentlichungstag der Anmeldung: 17.09.2014
(73) Patentinhaber: Parabeam B.V., 5705 CL Helmond (NL)
(72) Erfinder: Koot, Jurgen, 3620 Lanaken (BE); Tramnitz, Jürgen, 21039 Hamburg (DE)
(74) Vertreter: Henseler, Daniela

(56) Entgegenhaltungen:
- DE-A1- 4 228 958
- GB-A- 1 028 141
- JP-A- H05 247 783
- US-A- 4 840 828
- US-A- 5 589 245

## Beschreibung

Die Erfindung betrifft ein Polstermaterial für eine federnde, isolierende oder wattierende Abdeckung von Gegenständen oder Bauteilen.

Aus FR 1 393 269 ist ein derartiges Polstermaterial bekannt. Je nach Art des verwendeten Harzes, mit dem ein Abstandsgewebe getränkt wird, kann ein weiches oder hartes Material erzeugt werden. Als nachteilig erwiesen hat sich, dass das Polstermaterial nur abschwächende Eigenschaften aufgrund äußerer Einflussgrößen wie Temperatur, Schall, Druck usw. bietet. Auch aus GB 1,028,141 A ist ein Polstermaterial mit einer Doppelpolware bekannt.

Aus DE 37 05 756 A1 ist ein Kissen für Sitze in Kraftfahrzeugen bekannt, das aus einem beschichteten Doppelgewebe besteht, dessen Polfäden auf konstantem Abstand gehalten und an den Rändern luftdicht miteinander verbunden sind. Zur Klimatisierung der Sitz- und Rückenlehnen-Fläche und zur Vermeidung eines Wärmestaus ist vorgesehen, dass die elastomere Beschichtung auf einer Seite des Doppelgewebes luftdurchlässig perforiert ist und das Innere des Kissens an eine regelbare Luftzuführung zur Erzeugung eines permanenten Luftstromes unter Überdruck angeschlossen ist. Die Belüftung eines Sitzes ist dadurch verbessert, der Sitzkomfort ist allerdings gering, da er der einer Luftmatratze gleicht und kaum dämpfende Eigenschaften aufweist.

Aus DE 199 54 978 C1 ist ein Sitzteil für einen Fahrzeugsitz bekannt, bei dem ein luftdurchlässiger Polsterbezug einen Polsterträger aus einem Schaumstoff überspannt. Der Sitzkomfort wird dann durch den Schaumstoff gewährleistet. Der Schaumstoff ist üblicherweise ein Polyurethanschaum. Polyurethanschäume zeigen allerdings ein verändertes Nachgiebigkeitsverhalten bei einer geringfügigen Erwärmung durch den sitzenden Menschen. Diese Erwärmung bewirkt ein weiteres Einsinken des sitzenden Menschen. Das größere Einsinken ist aber mit einer großflächigen Berührung der Menschen mit dem Kunststoffschaum verbunden. Dieses tiefere Einsinken verursacht ein stärkeres Schwitzen.

Aus DE 10 2004 037 625 A1 ist daher eine Matratze mit mindestens einer Schicht aus einem Abstandsgewebe bekannt, wobei das Abstandsgewebe aus zwei äußeren Gewebeschichten besteht, die durch Elemente wie Filamente, Fasern oder Fäden miteinander verbunden sind. Dieses Abstandsgewebe besitzt eine gestufte Nachgiebigkeit, da zwischen den Gewebeschichten weitere und dünnere Gewebe vorgesehen sind, die erst dann Last aufnehmen, wenn das Abstandsgewebe auf das Maß der dünneren Gewebe zusammengedrückt ist. Derartige Gewebe sind allerdings recht schwer aufgrund des hohen Faseranteils.

Aus DE 195 45 596 C2 ist ein Innenverkleidungs- und/oder Sitzbezugsstoff für Fahrzeuge, Flugzeuge und dergleichen bekannt, bei der die im Stand der Technik bekannte Schaumstoffschicht wegfällt und ersetzt wird durch eine geraute Flordecke, die in eine Unterware eingebunden ist. Die geraute Flordecke ist weichelastisch und besitzt eine gute Rückstellkraft, wodurch sie als stoßabsorbierende Unterpolsterschicht geeignet ist. Aufkaschiert wird dann noch eine Oberware. Derartige Bezugsstoffe besitzen allerdings nur eine geringe dämpfende- bzw. stoßabsorbierende Wirkung und können Schaumstoffe nicht ersetzen.

Aufgabe der Erfindung ist es daher, ein Polstermaterial nach dem Oberbegriff des Anspruchs 1 zu schaffen, dessen Bequemlichkeit verbessert ist.

Diese Aufgabe wird durch die Merkmale des Anspruchs 1 gelöst.

Hierdurch wird ein Polstermaterial geschaffen, dessen Federkennlinie nichtlinear ist unter Ausbildung einer Dämpfungszone. Unter Belastung zeigt das Polstermaterial zunächst eine mit der Eindrucktiefe ansteigende Rückstellkraft, die dem Material eine von Polstern bekannte Nachgiebigkeit verleiht. In diesem Bereich wird die Rückstellkraft des Polstermaterials durch eine elastische Verformung bestimmt, die von den die Ober- und Unterware verbindenden Stegen bereitgestellt wird.

Bei steigender Belastung geht die Kennlinie des Polstermaterials in einen mittleren Kennlinienbereich über. Vorzugsweise hängt dann die Rückstellkraft gar nicht mehr oder nur geringfügig von der Eindrucktiefe ab, da die Knicklast der Stege erreicht ist. Diese Parameter des Polstermaterials hängen unmittelbar ab von der Härte des verwendeten Harzes und dem Raumgewicht des Polstermaterials. Beide Parameter ermöglichen daher, die Nachgiebigkeit des Polstermaterials an den jeweiligen Anwendungsfall anzupassen.

Die mittlere Federkennlinie zeigt ein ausgeprägtes Hystereseverhalten, für das ursächlich ist die Harztränkung, durch die die innere Reibung der Stege bei der Verformung der Stege erhöht wird. Dieses Hystereseverhalten verleiht dem Polstermaterial im mittleren Bereich eine Dämpfungskapazität. In Kombination mit dem flacheren Verlauf der Kennlinie qualifiziert sich das Polstermaterial damit in diesem Bereich als besonders gut dämpfend, da kurzzeitige Belastungen oder Stöße schnell aufgenommen werden und deren Energie vom Polstermaterial absorbiert wird.

Unter weiter steigenden Belastungen zeigt das Polstermaterial eine wieder stärker ansteigende Federkennlinie. Die Rückstellkraft wird nach weitgehender Durchbiegung der Stege durch die nun elastische Volumenkompression der harzgetränkten Doppelpolware selbst dominiert. Dieser durch die obere Kennlinie bestimmte Bereich verhindert somit ein übermäßiges Einsinken in das Polstermaterial bei hohen Belastungen. Verwendet man das Material vorzugsweise zur Polsterung eines Fahrzeugsitzes, so sorgt dieser obere Kennlinienbereich auch bei sportlicher Fahrweise für den nötigen Halt und sichert nach Ende der erhöhten Belastung die Rückkehr in den mittleren gedämpften Kennlinienbereich.

Weiterhin vorteilhaft an dem erfindungsgemäßen Polstermaterial ist die Einstellbarkeit der Eigenschaften des Materials im mittleren Kennlinienbereich. Insbesondere ist die Dämpfungskapazität durch das Raumgewicht und die Härte der Harztränkung einstellbar. Außerdem korreliert die Höhe der Rückstellkraft im mittleren Kennlinienbereich mit der Höhe der Härte der Harztränkung und der Höhe des Raumgewichts.

Durch die Einstellbarkeit der Materialeigenschaften kann das Polstermaterial vielseitig eingesetzt werden, wobei die Parameter Raumgewicht und Harzhärte vorzugsweise so gewählt werden, dass bei der in der jeweiligen Verwendung zu erwartenden Belastung der mittlere Kennlinienbereich mit einer wählbaren Dämpfungskapazität erreicht wird. So kann das Polstermaterial bei Verwendung in Matratzen an das Gewicht des Menschen angepasst werden, während eine Polsterung für den schonenden Transport von Waren eine hohe Dämpfungskapazität aufweisen sollte.

Weitere Vorteile und Ausgestaltungen der Erfindung sind der nachfolgenden Beschreibung und den Unteransprüchen zu entnehmen.

Nachfolgend wird die Erfindung an Hand der in den beigefügten Abbildungen dargestellten Ausführungsbeispiele näher erläutert.
Fig. 1 zeigt schematisch die perspektivische Ansicht eines erfindungsgemäßen Polstermaterials,
Fig. 2 zeigt schematisch die nichtlineare Federkennlinie des erfindungsgemäßen Polstermaterials mit einem mittleren Kennlinienbereich, der durch die Höhe der Rückstellkraft und die Dämpfungskapazität charakterisiert ist,
Fig. 3 zeigt schematisch die nichtlineare Federkennlinie des erfindungsgemäßen Polstermaterials mit erhöhter Rückstellkraft im mittleren Kennlinienbereich,
Fig. 4 zeigt schematisch die nichtlineare Federkennlinie des erfindungsgemäßen Polstermaterials mit erhöhter Dämpfungskapazität im mittleren Kennlinienbereich,
Fig. 5 zeigt schematisch die nichtlineare Federkennlinie des erfindungsgemäßen Polstermaterials mit erhöhter Rückstellkraft und erhöhter Dämpfungskapazität im mittleren Kennlinienbereich.

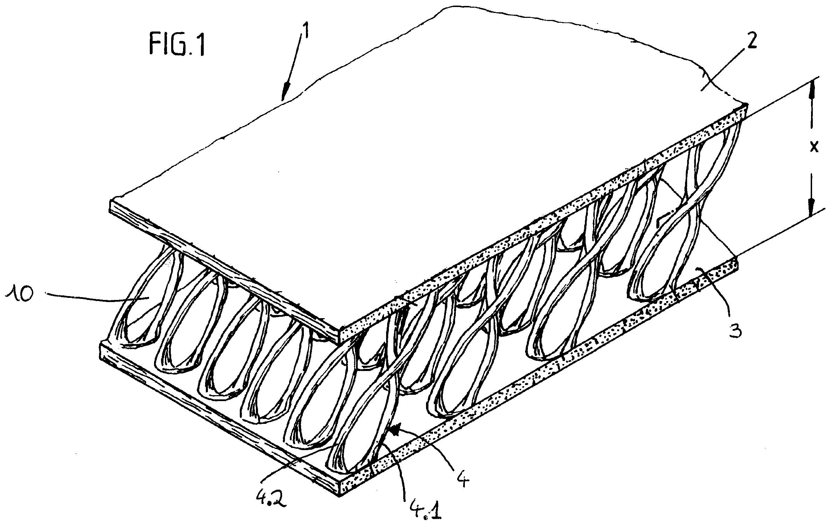

Das in Fig. 1 dargestellte Polstermaterial für eine federnde, isolierende oder wattierende Abdeckung von Gegenständen oder Bauteilen ist durch Harztränkung einer Doppelpolware 1 hergestellt. Die Harztränkung ist derart, dass die Doppelpolware 1 elastisch imprägniert ist. Die Doppelpolware 1 umfasst dabei eine Oberware 2 und eine Unterware 3, die durch Polfäden 4 beabstandet miteinander verbunden sind. Die Polfäden 4 bilden Stege aus, die im dargestellten Ausführungsbeispiel aus wendelförmig verdrillten Einzelstegen 4.1, 4.2 bestehen und die die Oberware 2 und die Unterware 3 mit einer Beabstandung X voneinander beabstanden. Auf diese Weise wird eine Formfederung mit nichtlinearer Federkennlinie 5 gebildet.

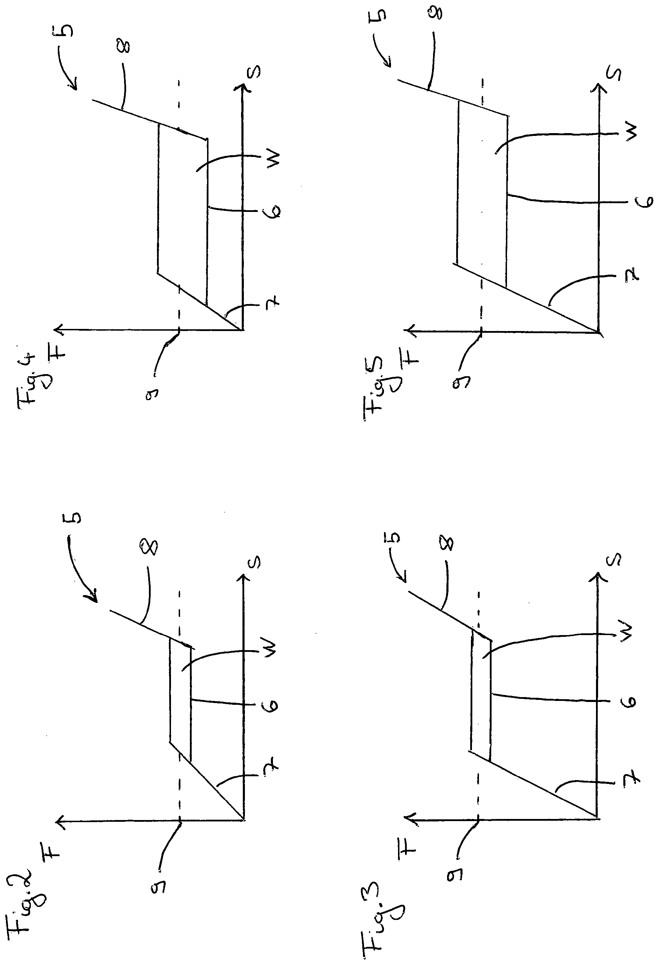

Die in Fig. 2 schematisch dargestellte nichtlineare Federkennlinie 5 zeichnet sich durch die Ausbildung von drei qualitativ unterschiedlichen Kennlinienbereichen aus. Ein unterer 7 und ein oberer Kennlinienbereich 8 sind ansteigend ausgebildet. Die Steigung dieser Kennlinienbereiche kann der Federeigenschaft typischer Polstermaterialien entsprechen. Demgegenüber verläuft ein mittlerer Kennlinienbereich 6 flacher und weist ein Hystereseverhalten auf, das der imprägnierten Doppelpolware 1 eine innere Dämpfungskapazität W verleiht. Diese Dämpfungskapazität W ist durch das Raumgewicht (des Polstermaterials) und die Härte der Harztränkung einstellbar.

Die Höhe einer Rückstellkraft 9 im mittleren Kennlinienbereich 6 korreliert mit der Härte der Harztränkung und der Höhe des Raumgewichts, wodurch diese Einstellparameter sind. Es werden Harze mit Härten im Bereich 30 bis 90 Shore A verwendet. Die Fadenstärke für die Fadensysteme der Oberware 2 und der Unterware 3 und für das Fadensystem der Polfäden 4 liegt vorzugsweise im Bereich von 60 bis 300 tex. Die Polfäden 4 können über V- oder W-Noppen in die Oberware 2 und die Unterware 3 eingebunden sein. Die Dichte der Polfäden 4 liegt dabei vorzugsweise im Bereich von 50 bis 200 Polfäden/cm². Die Länge der Polfäden 4 liegt vorzugsweise in einem Bereich von 1,0 bis 50 mm. Die Polfäden 4 bestehen vorzugsweise aus einem Filamentgarn. Die Länge der Polfäden 4 ist damit ursächlich für die Beabstandung X. Die Dichte und die Länge der Polfäden 4 in Verbindung mit der Garnstärke der Fadensysteme beeinflussen unter anderem das Raumgewicht des Polstermaterials.

Fig. 3 zeigt die nichtlineare Kennlinie 5 eines Ausführungsbeispiels, bei dem durch eine Wahl eines hohen Raumgewichts, beispielsweise Fadenstärke 300 tex für ein oder mehrere Fadensysteme der Doppelpolware 1 und einer Länge der Polfäden 4 von etwa 15 mm, die Rückstellkraft 9 des mittleren Kennlinienbereichs 6 bei entsprechender Dämpfungskapazität W erhöht ist.

In Fig. 4 ist ein Ausführungsbeispiel dargestellt, bei dem die Dämpfungskapazität W durch Wahl eines härteren Harzes, von beispielsweise 80 Shore A, erhöht ist.

Das in Fig. 5 dargestellte Ausführungsbeispiel zeigt ein Polstermaterial mit erhöhter Rückstellkraft 9 und erhöhter Dämpfungskapazität W. Dies kann durch die Wahl eines harten Harzes, von beispielsweise 80 Shore A, in Verbindung mit einem hohen Raumgewicht, beispielsweise Fadenstärke 300 tex für ein oder mehrere Fadensysteme der Doppelpolware 1 und einer Länge der Polfäden 4 von etwa 15 mm, erreicht werden.

Da die Verwendung eines härteren Harzes auch die Rückstellkraft 9 erhöht und das Polstermaterial insgesamt versteift, hat die Variation des Raumgewichts für härtere Harze als beispielsweise 60 Shore A nur noch eine geringere Auswirkung.

Gemäß einem nicht dargestellten Ausführungsbeispiel kann das Polstermaterial an ein Lüftungs- oder Beheizungssystem angeschlossen sein. Da erfindungsgemäß zwischen der Oberware 2 und der Unterware 3 nur die Polfäden 4 angeordnet sind, ist ein Freiraum 10 zwischen der Oberware 2 und der Unterware 3 ausgebildet, der durchströmbar ist. Das erfindungsgemäße Polstermaterial bietet damit einen verbesserten Sitzkomfort in Kombination mit einem Klimatisierungseffekt, ohne hierfür zusätzliche Bauteile notwendig zu machen. Das Medium, das dazu durch den Freiraum 10 geleitet wird, ist wählbar und kann jede Form von Fluid sein.

Wie die vorstehenden Ausführungsbeispiele zeigen, ermöglichen die Einstellparameter Harzhärte und Raumgewicht die Ausbildung eines Polstermaterials auch in der Weise, dass auch für unterschiedliche Polstermaterialgewichte vergleichbare Polstereigenschaften erreicht werden. Die Einstellparameter können sich teilweise substituieren.

Die Oberware 2 und die Unterware 3 können gewebt, gestrickt, gewirkt, getuftet oder als Raschelware ausgebildet sein. Die Doppelpolware 1 kann in Kettsamttechnik hergestellt sein. Als Harze für die Harztränkung kommen beispielsweise PU-Harze zur Verwendung.

Die Doppelpolware 1 kann im Bereich der Polfäden 4 auch ausgeschäumt sein mit einem insbesondere weichen Schaummaterial, wodurch die Dämpfungskapazität W zusätzlich beeinflussbar ist, insbesondere im mittleren Kennlinienbereich 6. Ein solcher Schaumstoff kann auch genutzt werden zur Aufnahme von Substanzen, die über das Polstermaterial bei seiner Benutzung abgegeben werden können. Die Sitzbewegung wird zu einer Pumpbewegung, die Substanzen aus einem solchen Schaumstoffmaterial ausfördern können. Vorteilhaft ist dies insbesondere bei antimikrobiellen Additiven oder sonstigen Desinfektionsmitteln, mit denen der Schaumstoff ausgerüstet sein kann.

## Patentansprüche

1. Polstermaterial für eine federnde, isolierende oder wattierende Abdeckung von Gegenständen oder Bauteilen aus einer durch Harztränkung elastisch imprägnierten Doppelpolware (1), bei der eine Oberware (2) und eine Unterware (3) durch von Polfäden (4) gebildeten Stegen beabstandet verbunden sind, **dadurch gekennzeichnet, dass** die elastisch imprägnierte Doppelpolware (1) eine Formfederung mit einer nichtlinearen Federkennlinie (5) aufweist, die einen mittleren Kennlinienbereich (6) zwischen einem steigenden unteren (7) und einem steigenden oberen Kennlinienbereich (8) aufweist, und der mittlere Kennlinienbereich (6) einen gegenüber beiden flacheren Kennlinienverlauf mit einem Hystereseverhalten aufweist, das der imprägnierten Doppelpolware (1) eine innere Dämpfungskapazität (W) verleiht, die durch das Raumgewicht des Polstermaterials und die Härte der Harztränkung in einem Bereich von 30 bis 90 Shore A einstellbar ist und die von den Polfäden (4) gebildeten Stege aus wendelförmig verdrillten Einzelstegen (4.1, 4.2) bestehen.

2. Polstermaterial nach Anspruch 1, **dadurch gekennzeichnet, dass** die Höhe der Rückstellkraft (9) im mittleren Kennlinienbereich (6) korreliert mit der Höhe der Härte der Harztränkung und der Höhe des Raumgewichts.

3. Polstermaterial nach Anspruch 1 oder 2, **dadurch gekennzeichnet, dass** die Doppelpolware (1) Garne im Bereich von 60 bis 300 tex aufweist.

4. Polstermaterial nach einem der Ansprüche 1 bis 3, **dadurch gekennzeichnet, dass** die von den Polfäden (4) gebildeten Stege eine Beabstandung (X) im Bereich von 5 bis 20 mm erzeugen.

5. Polstermaterial nach einem der Ansprüche 1 bis 4, **dadurch gekennzeichnet, dass** die Oberware (2) und Unterware (3) ein Gewebe oder Gewirke sind.

6. Polstermaterial nach einem der Ansprüche 1 bis 5, **dadurch gekennzeichnet, dass** die Doppelpolware (1) an ein Lüftungs- oder Beheizungssystem anschließbar ist.

7. Polstermaterial nach einem der Ansprüche 1 bis 6, **dadurch gekennzeichnet, dass** die Doppelpolware (1) im Bereich der Polfäden (4) ausgeschäumt ist.

8. Polstermaterial nach Anspruch 7, **dadurch gekennzeichnet, dass** die Ausschäumung eine weiche Ausschäumung ist, die mit antimikrobiellen Additiven ausgeschäumt ist.

## Claims

1. Cushioning material for resilient, insulating or padding covering of articles or components, made of a double-pile fabric (1) elastically impregnated by resin saturation, in which a top fabric (2) and a bottom fabric (3) are connected in a spaced-apart manner by webs formed by pile threads (4), **characterized in that** the elastically impregnated double-pile fabric (1) has shape resilience with a non-linear spring characteristic (5), which has a central characteristic region (6) between a rising lower characteristic region (7) and a rising upper characteristic region (8), and the central characteristic region (6) has a flatter characteristic profile than both, with a hysteresis behaviour which gives the impregnated double-pile fabric (1) an internal damping capacity (W) which is settable by the density of the cushioning material and the hardness of the resin saturation in a range from 30 to 90 Shore A, and the webs formed by the pile threads (4) consist of helically twisted individual webs (4.1, 4.2).

2. Cushioning material according to Claim 1, **characterized in that** the degree of the restoring force (9) in the central characteristic region (6) correlates with the degree of hardness of the resin saturation and the degree of density.

3. Cushioning material according to Claim 1 or 2, **characterized in that** the double-pile fabric (1) has yarns in the range from 60 to 300 tex.

4. Cushioning material according to one of Claims 1 to 3, **characterized in that** the webs formed by the pile threads (4) produce a spacing (X) in the range of 5 to 20 mm.

5. Cushioning material according to one of Claims 1 to 4, **characterized in that** the top fabric (2) and bottom fabric (3) are woven fabrics or knitted fabrics.

6. Cushioning material according to one of Claims 1 to 5, **characterized in that** the double-pile fabric (1) is connectable to a ventilation or heating system.

7. Cushioning material according to one of Claims 1 to 6, **characterized in that** the double-pile fabric (1) is filled with foam in the region of the pile threads (4).

8. Cushioning material according to Claim 7, **characterized in that** the foam filling is a soft foam filling which is foamed with antimicrobial additives.

## Revendications

1. Matériau de rembourrage pour un recouvrement élastique, isolant ou matelassé d'objets ou de composants en un tissu à poils double (1) imprégné élastiquement par imprégnation dans une résine, dans lequel un tissu supérieur (2) et un tissu inférieur (3) sont reliés espacés par des brides formées par des fils de poil (4), **caractérisé en ce que** le tissu à poils double (1) imprégné élastiquement présente une résilience de forme avec une caractéristique de résilience non linéaire (5), qui présente une plage de caractéristique médiane (6) entre des plages de caractéristique inférieure ascendante (7) et supérieure ascendante (8), et la plage de caractéristique médiane (6) présente une courbe de caractéristique plus plate par rapport aux deux avec un comportement d'hystérésis, qui confère au tissu à poils double (1) imprégné une capacité d'amortissement interne (W), qui est réglable par le poids volumique du matériau de rembourrage et la dureté de l'imprégnation dans une résine dans une plage de 30 à 90 Shore A et les brides formées par les fils de poil (4) se composent de brides individuelles torsadées en hélice (4.1, 4.2).

2. Matériau de rembourrage selon la revendication 1, **caractérisé en ce que** la hauteur de la force de rappel (9) dans la plage de caractéristique médiane (6) corrèle avec la hauteur de la dureté de l'imprégnation dans une résine et la hauteur du poids volumique.

3. Matériau de rembourrage selon la revendication 1 ou 2, **caractérisé en ce que** le tissu à poils double (1) présente des fils dans la plage de 60 à 300 tex.

4. Matériau de rembourrage selon l'une quelconque des revendications 1 à 3, **caractérisé en ce que** les brides formées par les fils de poil (4) génèrent un espacement (X) dans la plage de 5 à 20 mm.

5. Matériau de rembourrage selon l'une quelconque des revendications 1 à 4, **caractérisé en ce que** le tissu supérieur (2) et le tissu inférieur (3) sont un tissu ou tricot.

6. Matériau de rembourrage selon l'une quelconque des revendications 1 à 5, **caractérisé en ce que** le tissu à poils double (1) peut être raccordé à un système de ventilation ou de chauffage.

7. Matériau de rembourrage selon l'une quelconque des revendications 1 à 6, **caractérisé en ce que** le tissu à poils double (1) est rempli de mousse dans la zone des fils de poil (4).

8. Matériau de rembourrage selon la revendication 7, **caractérisé en ce que** le moussage est un moussage doux, qui est rempli de mousse avec des additifs antimicrobiens.
